# EUROPEAN PATENT APPLICATION

(11) **EP 1 457 871 A2**
(43) Date of publication of application: **15.09.2004**
(21) Application number: 04005971.9
(22) Date of filing: 12.03.2004
(51) Int. Cl.: G06F 3/12

(54) **Print system and printer setting method**

(30) Priority: 13.03.2003 JP 2003067567
(71) Applicant: OKI DATA CORPORATION, Tokyo 108 (JP)
(72) Inventor: Sando, Keiichi, Minato-ku Tokyo 108 (JP)
(74) Representative: Betten & Resch

(57) **Abstract**

A shared printer monitoring unit monitors whether there is a change in shared printer which has been set as a shared printer from a client or not on the basis of shared printer information in a storing unit. If the shared printer monitoring unit detects deletion of any shared printer, a notifying unit notifies the client that the shared printer has been deleted. A burden on a network administrator who manages the shared printers is reduced.

## Description

### BACKGROUND OF THE INVENTION

### Field of the Invention

The invention relates to a print system and a printer setting method, in which when there is a change in printer which is used for printing by a client, the client is notified of such a fact.

### Related Background Art

Hitherto, a print system in which a print server and clients are connected via a network and the client requests printing has been used. In such a print system, for example, a conventional printer installing method is realized as follows.

That is, in an environment in which the print server and each client are connected to the same network, when a printer is connected to the network, a packet to notify another network device that the printer has been connected to the network is sent. When the print server detects the packet, a printer driver corresponding to the printer is installed into the print server and registered as a shared printer. E-mail is sent to the client user who has previously been registered. A program which is connected to the shared printer has been attached as contents of the E-mail. The user who received the E-mail installs the driver into the client PC by using a print server name and a printer name (for example, refer to JP-A-2000-215128).

However, in the above conventional print system there is such a problem that if, for example, deletion or the like of the shared printer occurs, since there is no means for notifying the client of such a fact or the like, a burden on a network administrator is heavy.

### SUMMARY OF THE INVENTION

It is an object of the invention to provide a print system and a printer setting method, in which when there is a change in printer which is used for printing by the client, the client is notified of such a fact.

To accomplish the above object, the invention uses the following constructions.

According to the invention, there is provided a print system comprising:
a printer monitoring unit which monitors whether there is a change in shared printers for executing a printing process from a client or not; and
a notifying unit which, in the case where the change is detected by the printer monitoring unit, notifies the client that there is the change in shared printers.

The print system may further comprise a shared printer information storing unit which stores shared printer information, and wherein the printer monitoring unit compares received printer information with the shared printer information stored in the shared printer information storing unit, thereby discriminating that the change occurred in the printers.

In the print system, if the change indicates deletion of one of the shared printers, the notifying unit notifies the client that the shared printer has been deleted.

Further, in the print system, the notifying unit notifies the client of a name of the deleted printer and a name of a print server by E-mail.

Moreover, in the print system, if the change indicates a change in shared name of one of the shared printers, the notifying unit notifies the client that the shared printer name has been changed.

Furthermore, in the print system, the notifying unit notifies the client of information of a deleted printer and an added printer by E-mail.

Further, the print system may comprise a program forming unit which forms an installing program and installs it into a predetermined position, and wherein when addition of a shared printer is detected by the printer monitoring unit, the program forming unit forms an installing program of the printer and installs it into a predetermined position.

Moreover, in the print system, the notifying unit notifies the client of information of the installing position of the installing program together with information of the printer.

Furthermore, in the print system, the installing position is a Web page.

Further, in the print system, the program forming unit forms an installing program for direct printing and installs it into a predetermined position, and the notifying unit notifies the client of information of the installing position.

According to the present invention, there is provided a printer setting method, comprising:
monitoring whether there is a change in shared printers for executing a printing process from a client or not, by a printer monitoring unit; and
notifying the client that there is the change in shared printers, by a notifying unit, in the case where the change is detected by the printer monitoring unit.

The printer setting method may further comprise a step of storing shared printer information by a shared printer information storing unit, and wherein the printer monitoring unit compares received printer information with the shared printer information stored in the shared printer information storing unit, thereby discriminating that the change occurred in the printers.

In the printer setting method, if the change indicates deletion of one of the shared printers, the notifying unit notifies the client that the shared printer has been deleted.

Further, in the printer setting method, the notifying unit notifies the client of a name of the deleted printer and a name of a print server by E-mail.

Moreover, in the printer setting method, if the change indicates a change in shared name of one of the shared printers, the notifying unit notifies the client that the shared printer name has been changed.

Furthermore, in the printer setting method, the notifying unit notifies the client of information of a deleted printer and an added printer by E-mail.

Further, in the printer setting method may comprise a step of forming an installing program and installs it into a predetermined position by a program forming unit, and wherein when addition of a shared printer is detected by the printer monitoring unit, the program forming unit forms an installing program of the printer and installs it into a predetermined position.

Moreover, in the printer setting method, the notifying unit notifies the client of information of the installing position of the installing program together with information of the printer.

Furthermore, in the printer setting method, the installing position is a Web page.

Further, in the printer setting method, the program forming unit forms an installing program for direct printing and installs it into a predetermined position, and the notifying unit notifies the client of information of the installing position.

The above and other objects and features of the present invention will become apparent from the following detailed description and the appended claims with reference to the accompanying drawings.

### BRIEF DESCRIPTION OF THE DRAWINGS

Fig. 1 is a constructional diagram showing the embodiment 1 of a print system of the invention;
Fig. 2 is a flowchart showing the operation of the embodiment 1;
Fig. 3 is an explanatory diagram showing contents of E-mail which is sent to the client;
Fig. 4 is a constructional diagram showing the embodiment 2 of the print system of the invention;
Fig. 5 is a flowchart showing the operation of the embodiment 2;
Fig. 6 is a constructional diagram showing the embodiment 3 of the print system of the invention;
Fig. 7 is a flowchart showing the operation of the embodiment 3;
Fig. 8 is a constructional diagram showing the embodiment 4 of the print system of the invention;
Fig. 9 is an explanatory diagram of a printer database in the embodiment 4; and
Fig. 10 is a flowchart showing the operation of the embodiment 4.

### DETAILED DESCRIPTION OF THE PREFERRED EMBODIMENTS

Embodiments of the invention will be described in detail hereinbelow with reference to the drawings.

### «Embodiment 1»

### <Construction>

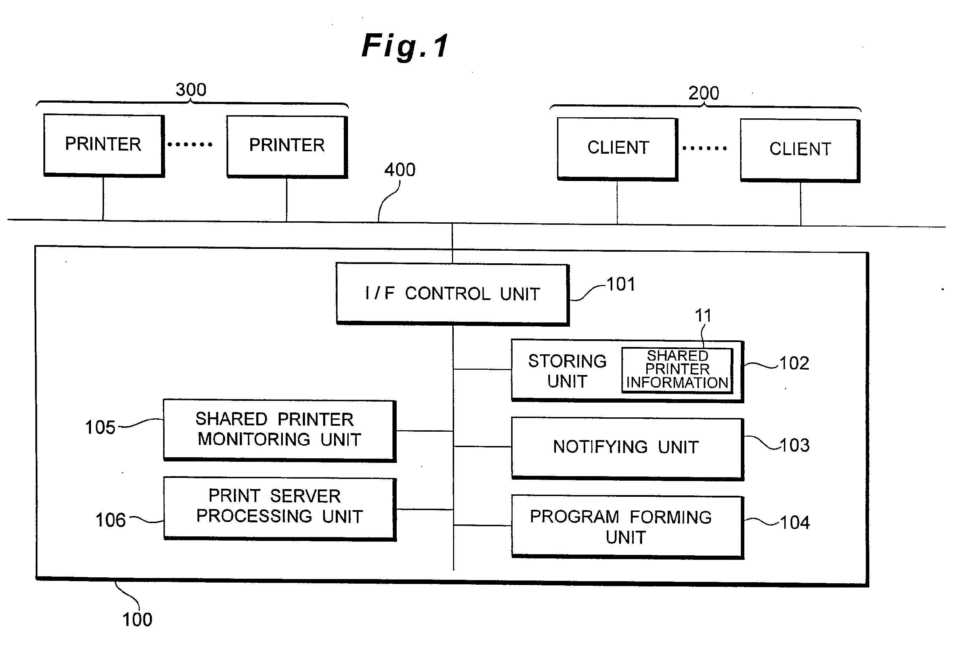

Fig. 1 is a constructional diagram showing the embodiment 1 of a print system of the invention.

The system shown in the diagram comprises a print server 100, clients 200, printers 300, and a network 400.

The print server 100 is a functional unit which receives a print request from the client 200 and executes a printing process for the printer 300. The print server 100 is realized on a server computer or constructed as a dedicated apparatus. The print server 100 comprises an I/F control unit 101, a storing unit 102, a notifying unit 103, a program forming unit 104, a shared printer monitoring unit 105, and a print server processing unit 106.

The I/F control unit 101 is an interface for making communication control between each functional unit of the print server 100 and the network 400. The storing unit 102 is a storing unit which stores an E-mail address and the like of the user of the client 200 and stores shared printer information 11 showing information of the printer which has been set as a shared printer. The notifying unit 103 has such a function that if a change such as addition or deletion occurs in the shared printer, the notifying unit 103 notifies the client 200 of such a fact by using a protocol such as SMTP by E-mail. The notifying unit 103 also has such a function that if a new shared printer is added, an installing program for the client formed by the program forming unit 104 is attached to the E-mail for notifying of such an addition of the new shared printer.

The program forming unit 104 has such a function that, when the new shared printer is added, the installing program for the client corresponding to the shared printer is formed. The program forming unit 104 preliminarily has a database of the installing program for the client corresponding to each shared printer and is constructed so as to form the installing program for the client by using the database. The program forming unit 104 also has such a function that if the shared printer which does not exist in the database is notified, a notification to send the E-mail to the network administrator so as to install the installing program for the client is made to a notifying unit 103a.

The shared printer monitoring unit 105 is a functional unit which monitors whether a change has occurred in the shared printer which is set into the print server 100. The shared printer monitoring unit 105 manages the shared printer in a printer folder of, for example, a Windows (registered trademark of Microsoft Corporation in U.S.A.) system and is realized by means such as a hook function in the Windows system. That is, the shared printer monitoring unit 105 has such a function that, when some change occurs in the printer folder, it is collated with the shared printer information 11 stored in the storing unit 102 in response to a change notification from the Windows system, so that if the shared printer has been added, the program forming unit 104 is notified that the new printer has been added.

The print server processing unit 106 is a processing unit corresponding to a print processing function as a print server 100. That is, the print server processing unit 106 has a printer driver corresponding to the shared printer and has a function for instructing the designated shared printer to print on the basis of a print request from the client 200.

Each construction of the component elements from the notifying unit 103 to the print server processing unit 106 is realized by a program corresponding to each function and hardware such as CPU, memory, and the like for executing those programs.

The client 200 is a user's terminal such as a personal computer for requesting a printing process to the shared printer via the print server 100 and has a function for receiving an E-mail from the print server 100. Further, the printer 300 is a printer connected to the network 400 and a shared printer for executing the printing process in accordance with a printing instruction from the print server 100. The network 400 is a network such as an LAN or the like which makes communication in accordance with, for example, a protocol such as TCP/IP or the like.

### <Operation>

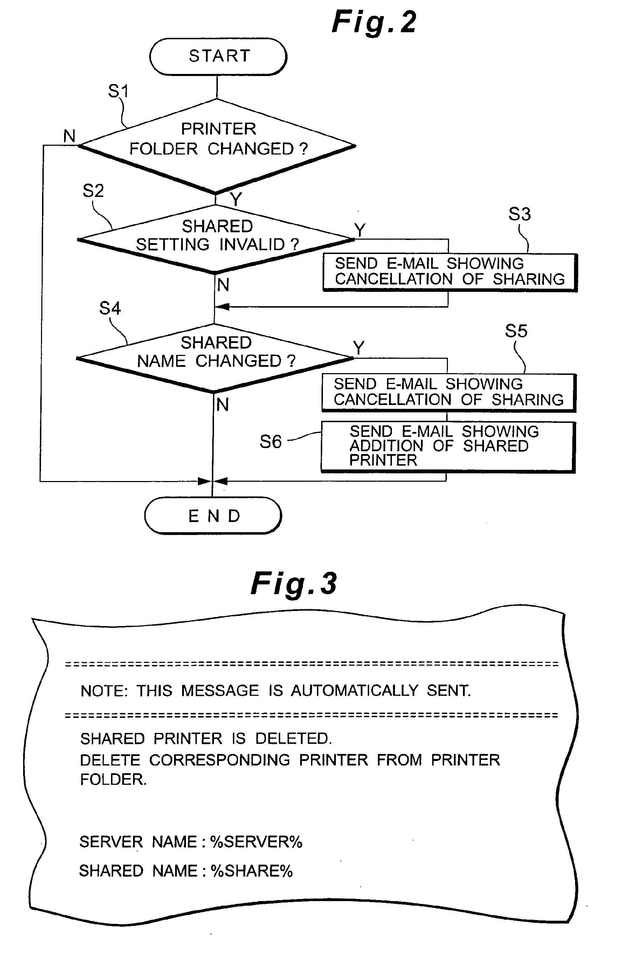

Fig. 2 is a flowchart showing the operation of the embodiment 1.

First, the shared printer monitoring unit 105 monitors whether there is a change in printer folder or not (step S1). That is, if some change occurs in the printer folder of the Windows system, the hook function is called. Thus, the shared printer monitoring unit 105 refers to the previous shared printer information 11 stored in the storing unit 102. The shared printer information 11 is updated (overwritten) each time there is a change in shared printer. The shared printer monitoring unit 105 compares such shared printer information 11 with contents of the printer folder after the change, thereby specifying how the printer folder has been changed. First, a case where the shared setting of the printer which has been set as a shared printer is invalidated (YES ("Y") in step S2) will be described. That is, the case where the shared setting has been cancelled although the printer exists in the printer folder will be described.

As a result of the comparison of the contents of the printer folder after the change and the shared printer information 11 stored in the storing unit 102, since the printer existing in the shared printer information 11 does not exist according to the contents after the change, the shared printer monitoring unit 105 determines that the shared setting of the relevant printer is invalid (such a printer is excluded from the shared printer). Thus, the shared printer monitoring unit 105 notifies the notifying unit 103 of the occurrence of cancellation of the sharing of the printer and its printer identification information. Thus, in the notifying unit 103, on the basis of the notified printer identification information, with reference to E-mail addresses of the clients 200 stored in the storing unit 102, E-mail showing that the sharing of the printer has been cancelled is sent to all of the registered clients 200 (step S3). Processes for registering and deleting the E-mail address of the client 200 in the storing unit 102 are separately executed by the network administrator.

Fig. 3 is an explanatory diagram showing the contents of the E-mail which is sent to the client 200.

As shown in the diagram, the E-mail in which a server name (name of the print server 100) and a shared name (name of the shared printer) have been described is sent to each client 200. Thus, the user recognizes that the relevant printer cannot be used, and deletes the relevant printer from the printer folder of the client 200.

The case where the shared name has been changed (the case of "Y" in step S4 in Fig. 2) will now be described. Also in this case, as a result of the comparison of the contents of the printer folder after the change and the shared printer information 11 in the storing unit 102, since the printer existing in the shared printer information 11 does not exist according to the contents after the change, the shared printer monitoring unit 105 determines that such a printer has been excluded from the shared printer. Since the printer which does not exist in the shared printer information 11 exists after the change, it is determined that the new shared printer has been connected. On the basis of such a discrimination result, the shared printer monitoring unit 105 notifies the notifying unit 103 of the occurrence of the cancellation of the sharing of the printer and identification information of such a printer and notifies the program forming unit 104 of printer identification information of the new printer.

Consequently, on the basis of the notified printer identification information, the program forming unit 104 forms an installing program for the client corresponding to the shared printer. In the notifying unit 103, on the basis of the notified printer identification information, the installing program for the client formed by the program forming unit 104 is attached to the E-mail showing the shared-cancelled printer and the added shared printer and the resultant E-mail is sent to all of the registered clients 200 with reference to the E-mail addresses of the clients 200 stored in the storing unit 102 (steps S5, S6).

According to the embodiment 1 as mentioned above, when the shared printer is deleted, the notifying unit 103 automatically notifies each client 200 of the deletion. Therefore, the operation in which the network administrator orally notifies each client 200 as in the conventional manner becomes unnecessary and a burden on the network administrator can be reduced.

### «Embodiment 2»

According to the embodiment 2, a Web server function for registering the installing program of the shared printer for the client is provided for the print server 100 in the embodiment 1.

### <Construction>

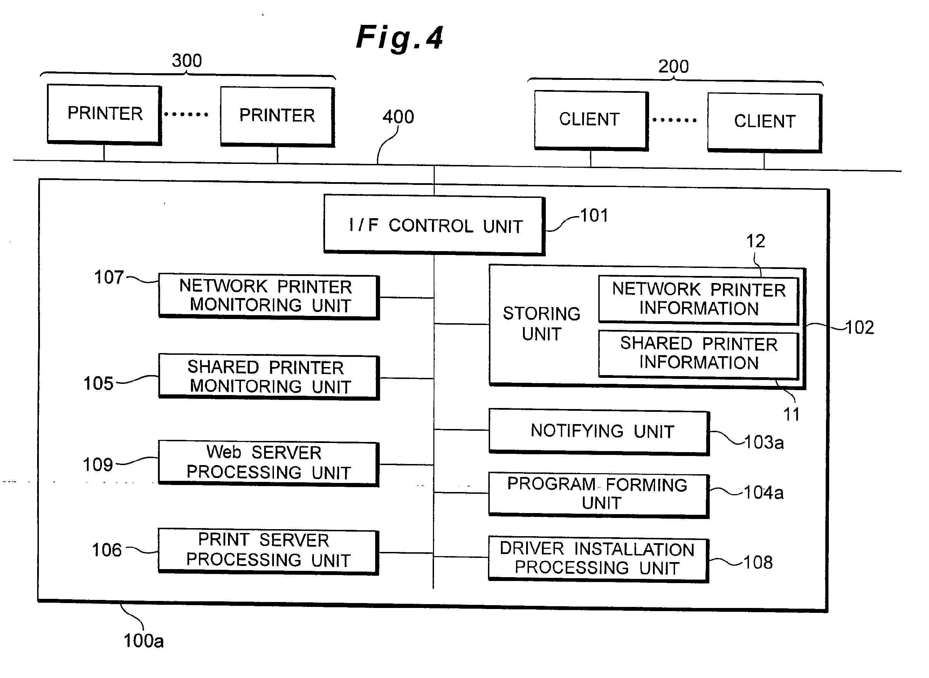

Fig. 4 is a constructional diagram of the embodiment 2.

In the diagram, since a construction of the clients 200 to the network 400 is similar to that of the embodiment 1 shown in Fig. 1, its description is omitted here.

A print server 100a comprises the I/F control unit 101, the storing unit 102, the notifying unit 103a, a program forming unit 104a, the shared printer monitoring unit 105, the print server processing unit 106, a network printer monitoring unit 107, a driver installation processing unit 108, and a Web server processing unit 109. Although fundamental functions of the I/F control unit 101 to the print server processing unit 106 are similar to those in the embodiment 1, they differ therefrom with respect to the following points.

That is, in addition to the shared printer information 11 in the embodiment 1, network printer information 12 is provided for the storing unit 102. The network printer information 12 is information of all of the printers 300 connected to the network 400 at that point of time and is updated when a change occurs. The notifying unit 103a has such a function that if a change occurs in the shared printer, contents of the change and, if the contents of the change indicate the addition of a new shared printer, a URL of a Web page on the Web server processing unit 109 in which an installing program for such a printer has been installed are notified. Further, the program forming unit 104a has such a function that if the new shared printer is added, an installing program for the client for the shared printer is formed and registered into the Web server processing unit 109.

The network printer monitoring unit 107 has such a function that the printers 300 connected to the network 400 are searched and collated with the network printer information 12 in the storing unit 102 at regular time intervals, thereby discriminating whether a change has occurred or not. The network printer monitoring unit 107 has such a function that if the newly connected printer 300 is detected, the driver installation processing unit 108 is notified of the printer identification information such as a printer name of such a printer 300.

The driver installation processing unit 108 has such a function that if the new printer 300 is detected on the network 400 by the network printer monitoring unit 107, the printer driver corresponding to such a printer is installed into the print server processing unit 106 and this printer is set as a shared printer. The driver installation processing unit 108 previously has a database of the printer driver corresponding to each printer 300 and is constructed so as to install the printer driver by using the database.

The Web server processing unit 109 realizes a function as a Web server on the network 400 and has such a function that the installing program for the client of the shared printer is stored as a file which can be accessed from the client 200.

### <Operation>

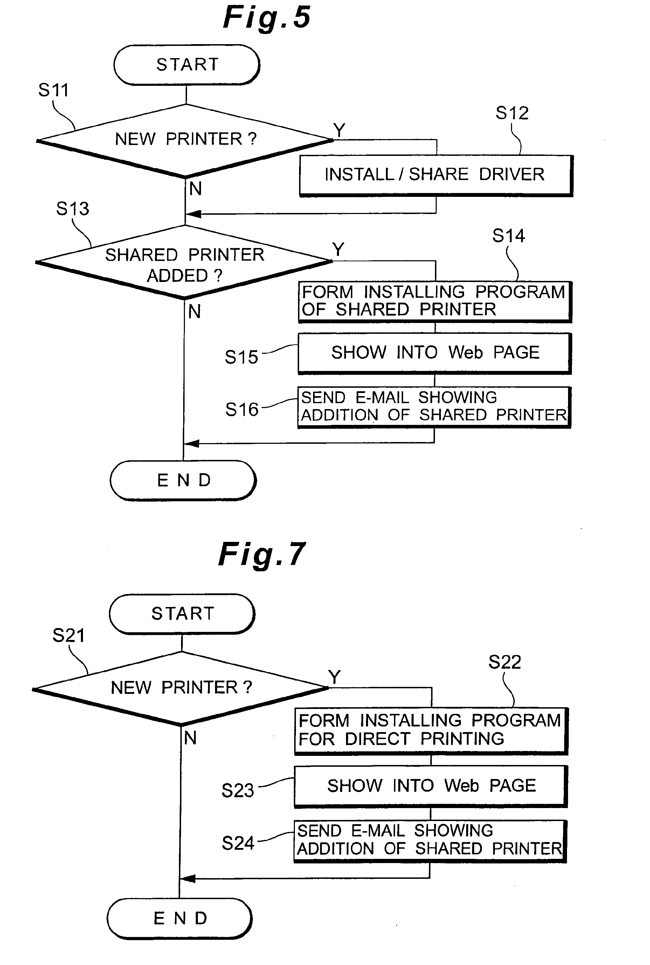

Fig. 5 is a flowchart showing the operation of the embodiment 2.

First, the network printer monitoring unit 107 searches for the printers 300 connected to the network 400 and collates them with the network printer information 12 at regular time intervals, thereby discriminating whether a change has occurred or not (step S11). If the new printer 300 is detected in step S11, the network printer monitoring unit 107 notifies the driver installation processing unit 108 of the printer identification information such as a printer name of the printer 300. Thus, the driver installation processing unit 108 installs the printer driver of the corresponding printer into the print server processing unit 106 and sets this printer as a shared printer (step S12).

If the driver installation processing unit 108 is notified of the printer 300 which does not exist in the database from the network printer monitoring unit 107, the notification to send the E-mail to the network administrator so as to install the printer driver is made to the notifying unit 103a.

In step S12, since the new shared printer is added, the shared printer monitoring unit 105 detects the addition of the shared printer (step S13). The operation of the detecting process is similar to that in the embodiment 1. since the shared printer monitoring unit 105 detects the new shared printer, the shared printer monitoring unit 105 notifies the program forming unit 104a of the printer identification information in a manner similar to the embodiment 1. Thus, the program forming unit 104a forms the installing program for the client corresponding to the shared printer (step S14) and registers it into the Web server processing unit 109 (step S15). Thus, in the Web server processing unit 109, information of the new shared printer is shown in the Web page. That is, the information such as printer name, IP address, MAC address, NIC name, and start button of the installing program of the printer is displayed in the Web page.

The program forming unit 104a notifies the notifying unit 103a of the completion of registration into the Web server processing unit 109. Thus, the notifying unit 103a sends E-mail including the contents indicative of the addition of the new shared printer and a URL of the Web page as position information of the installing program for client in the Web server processing unit 109 to each client 200 (step S16).

The operation in the case where the shared printer is deleted is similar to that in the embodiment 1.

The client 200 who received such E-mail accesses the designated URL. For example, a hyper link has been set in the URL of the E-mail and when the user clicks the URL, the Web page is displayed. Since the printer name, the start button of the installing program, and the like have been provided in the Web page, when the user depresses the start button of the relevant shared printer, the installing program is downloaded into the client 200 from the Web server processing unit 109 and the installation is completed. Since such processes are well-known processes, their detailed description is omitted here.

### <Effects>

As mentioned above, according to the embodiment 2, since the installing program of the shared printer is registered into the Web server and the client 200 is notified of the position information of the installing program, the following effects are obtained in addition to the effects of the embodiment 1.

For example, in the case where the client user has a plurality of personal computers and additionally sets the shared printer into all of the personal computers, it is necessary to hold the installing program of the shared printer attached to the E-mail into a storing medium and additionally set the shared printer into each personal computer. In such a case, in the embodiment, since the installing program for the client of the shared printer can be obtained from the Web server processing unit 109, by accessing the Web server processing unit 109 from all of the personal computers, the user who has a plurality of personal computers can easily obtain the installing program for the client of the shared printer.

### «Embodiment 3»

In the embodiment 3, an installing program for direct printing of the printer connected to the network is registered into the Web server and the client is notified of registration position information. That is, unlike the embodiments 1 and 2, according to the embodiment 3, the function as a print server is not provided but only the function for notifying the client by the E-mail and the function for registering into the Web server are provided.

### <Construction>

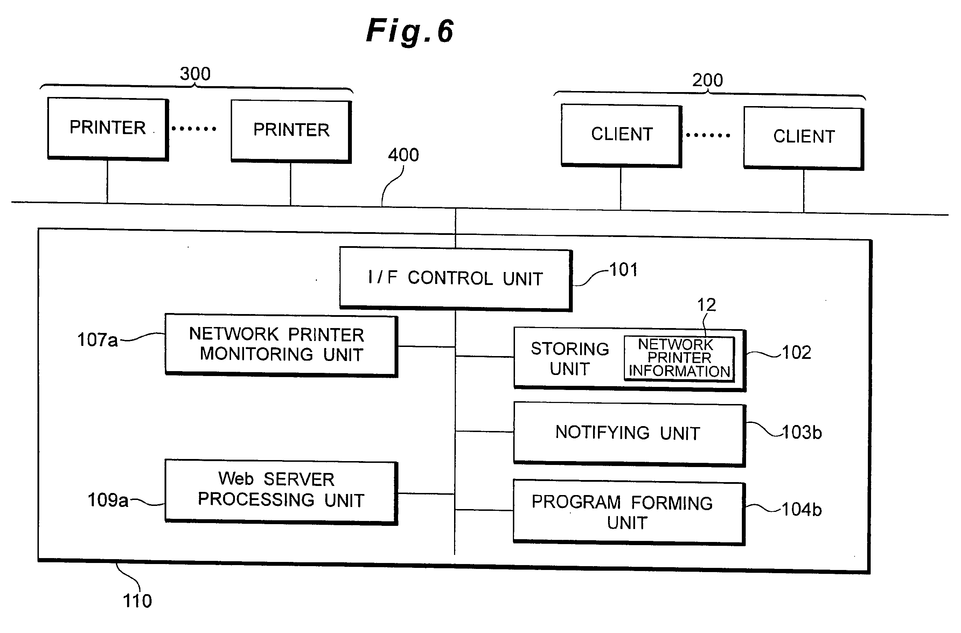

Fig. 6 is a constructional diagram of the embodiment 3.

In the diagram, although the construction of the client 200 to the network 400 is similar to that in the embodiments 1 and 2, in the embodiment, a file server 110 is provided instead of the print server as in the embodiments 1 and 2. That is, the file server 110 comprises the I/F control unit 101, the storing unit 102, a notifying unit 103b, a program forming unit 104b, a network printer monitoring unit 107a, and a Web server processing unit 109a.

Although functions of the I/F control unit 101, the storing unit 102, and the network printer monitoring unit 107a are similar to those in the embodiment 2, the following construction differs. That is, the notifying unit 103b has such a function that if a new printer 300 is added onto the network 400, contents indicative of the addition of such a printer and a URL of the installing program for direct printing in the Web server processing unit 109a are notified. The program forming unit 104b has such a function that when the network printer monitoring unit 107a detects that the new printer 300 has been added onto the network 400, the installing program for direct printing by which the client 200 uses the added printer 300 to directly print is formed and registered into the Web server processing unit 109a and such a function that the notifying unit 103b is notified of information of the Web page.

The program forming unit 104b previously has a database of the installing program for direct printing corresponding to each printer 300 and forms the installing program for direct printing by using the database. The program forming unit 104b has such a function that if the printer which does not exist in the database is notified, a notification to send the E-mail to the network administrator so as to install the installing program for direct printing is made to the notifying unit 103b.

The network printer monitoring unit 107a has such a function that if the new printer 300 is detected on the network 400, the program forming unit 104b is notified of identification information of such a printer. Further, the Web server processing unit 109a has a function as a Web server for holding the installing program for direct printing.

### <Operation>

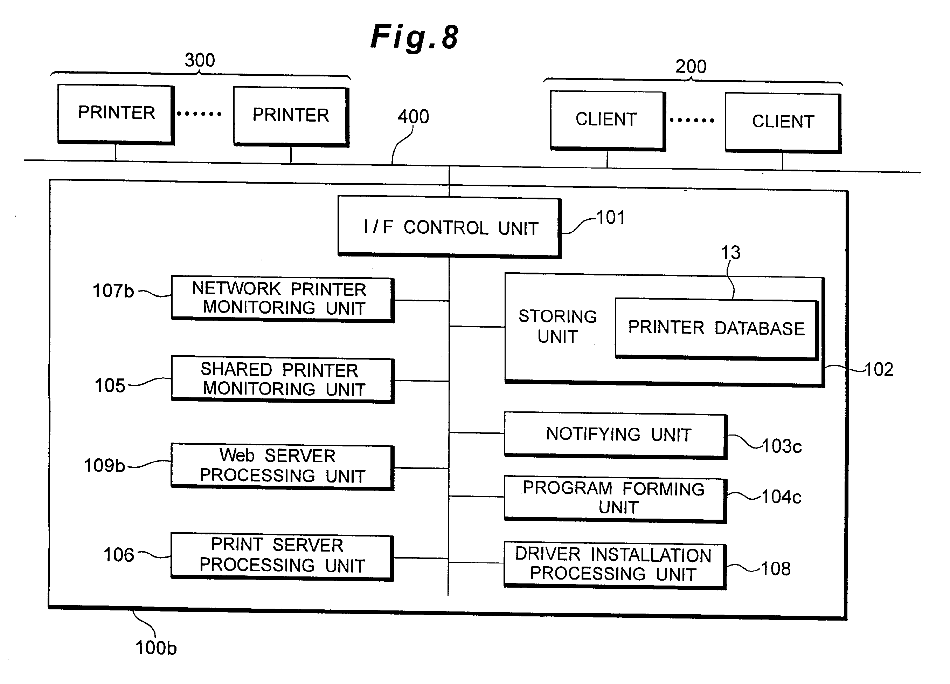

Fig. 7 is a flowchart showing the operation of the embodiment 3.

First, the network printer monitoring unit 107 searches for the printers 300 connected to the network 400 at regular time intervals, thereby discriminating whether a change has occurred or not (step S21). If the new printer 300 is detected in step S21, the network printer monitoring unit 107 notifies the program forming unit 104b of the printer identification information such as a printer name of the printer 300.

Thus, the program forming unit 104b forms the installing program for direct printing corresponding to the newly connected printer (step S22) and registers it into the Web server processing unit 109a (step S23).

Since the installing program for direct printing is registered into the Web server processing unit 109a by the program forming unit 104b, in the Web server processing unit 109a, the information of the newly connected printer is displayed on the Web page. That is, the information such as printer name, IP address, MAC address, NIC name, and start button of the installing program of the printer is displayed in the Web page. The program forming unit 104b notifies the notifying unit 103b of the end of the registration into the Web server processing unit 109a. Thus, the notifying unit 103b sends E-mail including the contents indicative of the addition of the newly connected printer and the URL of the Web page as position information of the installing program for direct printing in the Web server processing unit 109a to each client 200 (step S24).

The client 200 who received such E-mail accesses the designated URL. Thus, the Web page provided with the printer name, the start button of the installing program, and the like as mentioned above is displayed. When the client 200 installs the relevant printer, by depressing the start button of the installing program, the installing program is downloaded into the client 200 from the Web server processing unit 109a and the installation is completed.

### <Effects>

As mentioned above, according to the embodiment 3, since the installing program for direct printing of the printer connected onto the network 400 has been registered into the Web server processing unit 109a and the client 200 is notified of the position information of the installing program, there are the following effects. That is, it is also possible to cope with such a network environment that each client 200 directly transmits the print job to the printer 300 without providing the print server. Thus, for example, a restriction of the OS or the like of the print server in which both of the print server and the client 200 have to be the Windows systems is eliminated. Irrespective of the type of client 200, the print system can be realized so long as there is a communicating environment by E-mail.

### «Embodiment 4»

The embodiment 4 has both of the functions of the print system of the embodiment 2 and the print system of the embodiment 3.

### <Construction»

Fig. 8 is a constructional diagram of the embodiment 4.

In the diagram, the construction of the client 200 to the network 400 is similar to that in the embodiments 1 to 3. A print server 100b of the embodiment comprises the I/F control unit 101, the storing unit 102, a notifying unit 103c, a program forming unit 104c, the shared printer monitoring unit 105, the print server processing unit 106, a network printer monitoring unit 107b, the driver installation processing unit 108, and a Web server processing unit 109b. Since constructions of the I/F control unit 101, the shared printer monitoring unit 105, and the print server processing unit 106 are similar to those in the embodiment 2, their description is omitted here.

A printer database 13 showing information of each printer is provided for the storing unit 102.

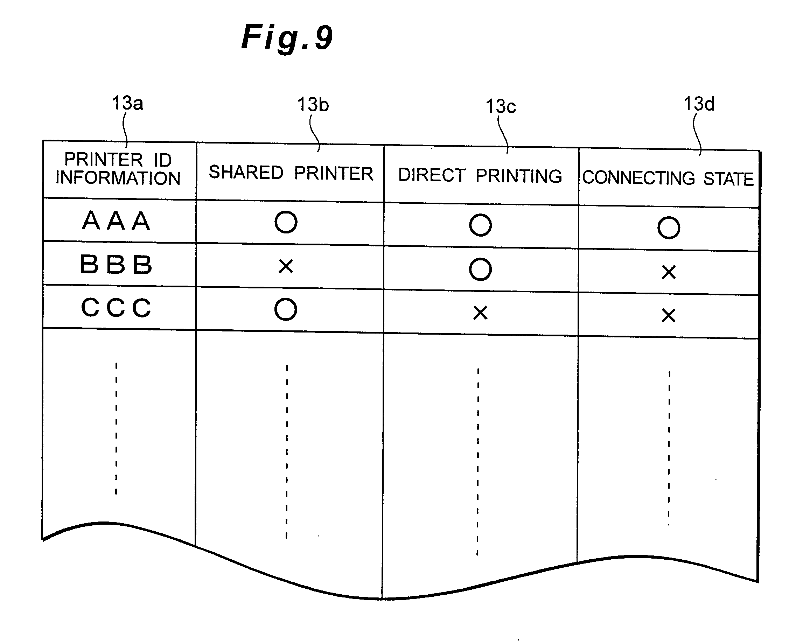

Fig. 9 is an explanatory diagram of the printer database 13.

As shown in the diagram, the printer database 13 is a database comprising: printer identification (ID) information 13a such as a printer name or the like for identifying the printer; a shared printer flag 13b showing whether the printer is valid as a shared printer or not; a direct printing flag 13c showing whether the printer is valid as a direct printing printer or not; and a connecting state flag 13d showing whether the printer has been connected or not. The flags showing whether the shared printer is valid or not and whether the direct printing is valid or not are preliminarily registered by the network administrator.

The notifying unit 103c has such a function that if a change occurs in shared printer or the printer for direct printing, contents of the change and, if the contents of the change indicate the addition of the new shared printer or the printer for direct printing, a URL of the Web page on the Web server processing unit 109b in which the installing program has been installed are notified. The program forming unit 104c has: such a function that, if the new shared printer has been added, an installing program for client for the shared printer is formed and registered into the Web server processing unit 109b; such a function that, if the printer for direct printing has been added, an installing program for direct printing for such a printer is formed and registered into the Web server processing unit 109b; and a function for notifying the notifying unit 103c of those registration information. The program forming unit 104c previously has the printer identification information and a database of an installing program corresponding thereto in a manner similar to the embodiments 2 and 3.

Further, the network printer monitoring unit 107b has such a function that the printers 300 connected to the network 400 are searched and collated with the connecting state flag 13d in the printer database 13 in the storing unit 102 at regular time intervals, thereby discriminating whether a change has occurred or not. The network printer monitoring unit 107b has such a function that if a change occurs, the shared printer flag 13b is referred to and, if the shared printer flag 13b is valid, the driver installation processing unit 108 is notified, and if the direct printing flag 13c is valid, the program forming unit 104c is notified.

The Web server processing unit 109b realizes the function as a Web server on the network 400 and has a function for storing the installing program for client of the shared printer and the installing program for direct printing as files which can be accessed by the client 200.

### <Operation>

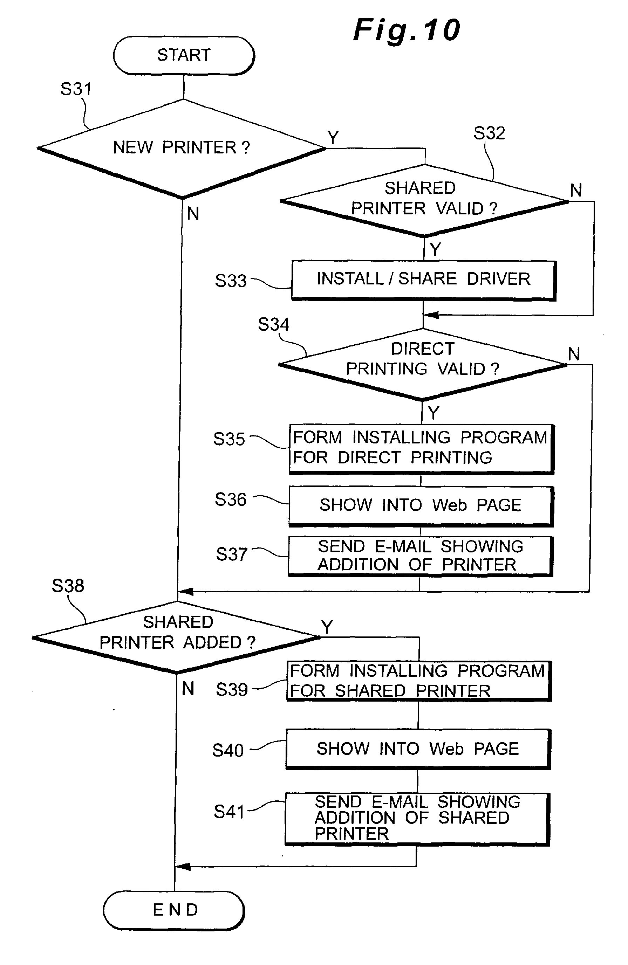

Fig. 10 is a flowchart showing the operation of the embodiment 4.

First, the network printer monitoring unit 107b searches for the printers 300 connected to the network 400 at regular time intervals (step S31). The discrimination about whether the new printer 300 has been connected or not is made by referring to the connecting state flag 13d in the printer database 13 provided in the storing unit 102. In step S31, if the new printer 300 is detected, the network printer monitoring unit 107b discriminates whether the shared printer is valid or not (step S32) with reference to the shared printer flag 13b in the printer database 13. In step S32, if the shared printer is valid, the driver installation processing unit 108 is notified of the printer identification information such as a printer name of the printer 300.

Thus, the driver installation processing unit 108 installs the printer driver of the corresponding printer into the print server processing unit 106 and sets this printer as a shared printer (step S33). If the shared printer is not valid in step S32, the process in step S33 is skipped.

Subsequently, the network printer monitoring unit 107b discriminates whether the direct printing is valid or not with reference to the direct printing flag 13c in the printer database 13 (step S34). If the direct printing is valid in step S34, the network printer monitoring unit 107b notifies the program forming unit 104c of the printer identification information of the printer 300. Thus, the program forming unit 104c forms the installing program for direct printing in a manner similar to the embodiment 3 (step S35) and registers it into the Web server processing unit 109b (step S36). Thus, in the Web server processing unit 109b, information of the newly connected printer is shown in the Web page. That is, the information such as printer name, IP address, MAC address, NIC name, and start button of the installing program of the printer is displayed in the Web page.

On the basis of an end notification of the installation into the Web server processing unit 109b from the program forming unit 104c, the notifying unit 103d sends E-mail including the contents indicative of the addition of the newly connected printer and a URL of the Web page as position information of the installing program for direct printing in the Web server processing unit 109b to each client 200 (step S37). If the direct printing is not valid in step S34, the processes in steps S35 to S37 are skipped.

The shared printer monitoring unit 105 discriminates whether the shared printer has been added or not (step S38). If the shared printer monitoring unit 105 detects the addition of the shared printer, the program forming unit 104c is notified of the printer identification information. Thus, the program forming unit 104c forms an installing program for client corresponding to the shared printer (step S39) and registers it into the Web server processing unit 109b (step S40). Thus, in the Web server processing unit 109b, information of the new shared printer is shown in the Web page. That is, the information such as printer name, IP address, MAC address, NIC name, and start button of the installing program of the printer is displayed in the Web page.

On the basis of the end notification of the installation from the program forming unit 104c, the notifying unit 103c sends E-mail including the contents indicative of the addition of the new shared printer and a URL of the Web page as position information of the installing program for client in the Web server processing unit 109b to each client 200 (step S41). The operation in the case where the shared printer has been deleted is similar to that in the embodiment 1.

In the case where the client 200 which received such E-mail installs the relevant printer 300, the installation is made by accessing the URL of the designated Web server processing unit 109 in a manner similar to the embodiments 2 and 3. Since those operations are similar to those in the embodiment 2 or 3, their detailed explanation is omitted here.

### <Effects>

As mentioned above, according to the embodiment 4, since the installing program of the shared printer and the installing program for direct printing have been registered into the Web server processing unit 109b, the following effects are obtained. That is, there are also a network environment in which the printing is performed via the print server, a network environment in which each client 200 directly transmits a print job to the printer 300, and a network environment in which those environments exist mixedly. In the embodiment, it is possible to apply to any of those environments and the user can select the installing program of the printer in accordance with each environment.

According to the installing program which is registered into the Web server processing unit 109b, if the printer corresponds to only either the shared printer or the printer for direct printing, only the corresponding installing program is installed. Therefore, a disk space of the Web server processing unit 109b can be saved.

### «Use modes»

In the embodiments 3 and 4, the installing program for direct printing has been registered into the Web server processing unit 109a (109b) and the client 200 has been notified of the position information by E-mail. However, the installing program for direct printing can be also attached to the E-mail in a manner similar to the embodiment 1.

In each of the foregoing embodiments, although the I/F control unit 101 to the shared printer monitoring unit 105 and the network printer monitoring unit 107 (107a) have been constructed as an apparatus which is integrated with the print server processing unit 106, they can be constructed as an apparatus provided separately from the print server processing unit 106. That is, they can be provided separately from the print server or can be provided separately from the Web server processing unit 109 (109a, 109b).

In each of the above embodiments, the monitoring processes of the shared printer monitoring unit 105 and the network printer monitoring unit 107 (107a, 107b) are not limited to the means of the embodiments but can be also realized by using any means so long as it can detect the shared printer and the network printer.

As described above, according to the invention, when the shared printer is deleted, each client is automatically notified of such information. Therefore, the burden on the network administrator can be reduced.

According to the invention, since the installing program of the shared printer is registered in a predetermined position and the client is notified of the position information, it is possible to easily cope with a case where there are a plurality of terminals as installation targets.

Further, according to the invention, since the installing program for direct printing is registered in a predetermined position and the client is notified of the position information of the installing program, there is no restriction of the OS or the like of the print server and it is possible to cope with any network environment.

According to the invention, since the installing program of the shared printer and the installing program for direct printing are registered in the predetermined positions, the invention can be also applied to any of the network environment in which the printing is performed via the print server, the network environment in which each client directly transmits the print job to the printer, and the network environment in which those network environments exist mixedly.

The present invention is not limited to the foregoing embodiments but many modifications and variations are possible within the spirit and scope of the appended claims of the invention.

Two or more embodiments may be combined with each other. In summary, an aspect of the invention can be described as follows:

A shared printer monitoring unit monitors whether there is a change in shared printer which has been set as a shared printer from a client or not on the basis of shared printer information in a storing unit. If the shared printer monitoring unit detects deletion of any shared printer, a notifying unit notifies the client that the shared printer has been deleted. A burden on a network administrator who manages the shared printers is reduced.

## Claims

1. A print system comprising:
a printer monitoring unit which monitors whether there is a change in shared printers for executing a printing process from a client or not; and
a notifying unit which, in the case where the change is detected by said printer monitoring unit, notifies said client that there is the change in shared printers.

2. The print system according to claim 1, further comprising a shared printer information storing unit which stores shared printer information, and
wherein said printer monitoring unit compares received printer information with the shared printer information stored in said shared printer information storing unit, thereby discriminating that the change occurred in the printers.

3. The print system according to claim 2, wherein if said change indicates deletion of one of the shared printers, said notifying unit notifies said client that said shared printer has been deleted.

4. The print system according to claim 3, wherein said notifying unit notifies said client of a name of the deleted printer and a name of a print server by E-mail.

5. The print system according to any of claims 2 to 4, wherein if said change indicates a change in shared name of one of the shared printers, said notifying unit notifies said client that the shared printer name has been changed.

6. The print system according to any of claims 2 to 5, wherein said notifying unit notifies said client of information of a deleted printer and an added printer by E-mail.

7. The print system according to any of the preceding claims, further comprising a program forming unit which forms an installing program and installs it into a predetermined position, and
wherein when addition of a shared printer is detected by said printer monitoring unit, said program forming unit forms an installing program of said printer and installs it into a predetermined position.

8. The print system according to claim 7, wherein said notifying unit notifies said client of information of the installing position of the installing program together with information of the printer.

9. The print system according to claim 7 or 8, wherein said installing position is a Web page.

10. The print system according to any of claims 7 to 9, wherein said program forming unit forms an installing program for direct printing and installs it into a predetermined position, and said notifying unit notifies said client of information of the installing position.

11. A printer setting method, comprising:
monitoring whether there is a change in shared printers for executing a printing process from a client or not, by a printer monitoring unit; and
notifying said client that there is the change in shared printers, by a notifying unit, in the case where the change is detected by said printer monitoring unit.

12. The printer setting method according to claim 11, further comprising:
storing shared printer information by a shared printer information storing unit,
wherein said printer monitoring unit compares received printer information with the shared printer information stored in said shared printer information storing unit, thereby discriminating that the change occurred in the printers.

13. The printer setting method according to claim 12, wherein if said change indicates deletion of one of the shared printers, said notifying unit notifies said client that said shared printer has been deleted.

14. The printer setting method according to claim 13, wherein said notifying unit notifies said client of a name of the deleted printer and a name of a print server by E-mail.

15. The printer setting method according to any of claims 12 to 14, wherein if said change indicates a change in shared name of one of the shared printers, said notifying unit notifies said client that the shared printer name has been changed.

16. The printer setting method according to any of claims 12 to 15, wherein said notifying unit notifies said client of information of a deleted printer and an added printer by E-mail.

17. The printer setting method according to any of claims 11 to 16, further comprising:
forming an installing program and installs it into a predetermined position by a program forming unit,
wherein when addition of a shared printer is detected by said printer monitoring unit, said program forming unit forms an installing program of said printer and installs it into a predetermined position.

18. The printer setting method according to claim 17, wherein said notifying unit notifies said client of information of the installing position of the installing program together with information of the printer.

19. The printer setting method according to claim 17 or 18, wherein said installing position is a Web page.

20. The printer setting method according to any of claims 17 to 19, wherein said program forming unit forms an installing program for direct printing and installs it into a predetermined position, and said notifying unit notifies said client of information of the installing position.
